# EUROPÄISCHE PATENTSCHRIFT

(11) **EP 2 931 789 B1**
(45) Veröffentlichungstag und Bekanntmachung des Hinweises auf die Patenterteilung: **27.03.2019**
(21) Anmeldenummer: 13811846.8
(22) Anmeldetag: 12.12.2013
(51) Int. Cl.: C08G 77/60, C08G 77/50, C04B 35/622

(54) **VERFAHREN ZUR SYNTHESE EINES CHLORFREIEN, PRÄKERAMISCHEN POLYMERS FÜR DIE HERSTELLUNG VON KERAMISCHEN FORMKÖRPERN**
METHOD FOR THE SYNTHESIS OF A CHLORINE-FREE, PRE-CERMANIC POLYMER FOR THE PRODUCTION OF CERAMIC MOLDED BODIES
PROCEDE DE SYNTHESE D'UN POLYMERE PRECERAMIQUE SANS CHLORE POUR LA FABRICATION DE CORPS MOULES CERAMIQUES

(30) Priorität: 14.12.2012 DE 102012223258
(43) Veröffentlichungstag der Anmeldung: 21.10.2015
(73) Patentinhaber: BJS Ceramics GmbH, 86368 Gersthofen (DE)
(72) Erfinder: GRABE, Norman, 86405 Meitingen (DE); ROTHMANN, Michael, 86405 Meitingen (DE)
(74) Vertreter: Henkel, Breuer & Partner
(86) Internationale Anmeldenummer: PCT/EP2013/076349
(87) Internationale Veröffentlichungsnummer: WO 2014/090934

(56) Entgegenhaltungen:
- WO-A1-2011/064174
- WO-A2-2010/072739
- US-A- 4 537 942
- US-A- 4 737 552
- US-A- 6 020 447
- Anonymous: "RÖMPP - Polysilane - Georg Thieme Verlag KG", , 1. April 2009 (2009-04-01), XP055098817, Gefunden im Internet: URL:https://roempp.thieme.de/roempp4.0/do/ data/RD-16-03571 [gefunden am 2014-01-28]
- Anonymous: "RÖMPP - Polycarbosilane - Georg Thieme Verlag KG", , 1. April 2009 (2009-04-01), XP055098818, Gefunden im Internet: URL:https://roempp.thieme.de/roempp4.0/do/ data/RD-16-03135 [gefunden am 2014-01-28]

## Beschreibung

Die vorliegende Erfindung betrifft ein Verfahren zur Herstellung eines chlorfreien, präkeramischen Polysilans, die chlorfreien und unschmelzbaren Polysilane selbst sowie Grünfasern und Keramikfasern, die unter Verwendung des erfindungsgemäßen Polysilans hergestellt worden sind, und ihre Verwendung in Siliciumcarbid-haltigen Formkörpern oder Faserverbundstoffen im Leichtbau, in der Halbleiterindustrie, in der Elektroindustrie, in der Medizintechnik, in der Raumfahrt, im Kraftfahrzeugbau und im Flugzeugbau.

Auf Grund ihrer Härte, Temperaturbeständigkeit, Stabilität und Halbleitereigenschaften finden Siliciumcarbid-enthaltende Keramikbauteile und Verbundstoffe ein breites Anwendungsspektrum in der Halbleiterindustrie, der Elektrotechnik, in der Medizintechnik, im Fahrzeug- und Flugzeugbau sowie in der Raumfahrt.

Im industriellen Maßstab erfolgt die Herstellung von Siliciumcarbid-enthaltenden Keramikbauteilen und Verbundstoffen über die Herstellung eines Polysilans, das in einem Schmelzspinnverfahren zu Fasern versponnen wird. Die Fasern werden dann gehärtet und zu keramischen Siliciumcarbid-Fasern pyrolysiert, die dann zu Keramikbauteilen oder Verbundstoffen weiterverarbeitet werden können.

Die Herstellung des Polysilans erfolgte erstmals über eine Wurtz-Kupplung, bei der ein Organohalogensilan, wie beispielsweise Dichlordimethylsilan mit geschmolzenem Natrium zu einem Polydimethylsilan umgesetzt wird. Ein solches Polysilan lässt sich zu Grünfasern verarbeiten, die sich zu Siliciumcarbid-Fasern pyrolysieren lassen. Ein wesentlicher Nachteil ist jedoch die aufwendige Synthese des Ausgangspolymers, die die Verwendung von Alkalimetallen, Reaktionen im Autoklaven und einen umständlichen Extraktionsprozess einschließt.

Ein kostengünstigeres Ausgangsmaterial für die Polysilanherstellung liefern Methylchlordisilan-Gemische, die als Abfallprodukte aus der Müller-Rochow-Synthese gewonnen werden können. Diese können unter homogener oder heterogener Katalyse zu Oligosilanen disproportioniert werden. In EP 668254B1 wird eine thermische Nachbehandlung zu Polysilanen und deren Umwandlung zu Siliciumcarbid-Fasern offenbart, die aber leicht aufschmelzbar sind, so dass sie beispielsweise mit Ammoniak vor der Pyrolyse gehärtet werden müssen. Andere Härtungsverfahren, beispielsweise mit Sauerstoff führen zu einem erhöhten Sauerstoffeintrag in die Faser, was deren Hochtemperaturstabilität stark beeinträchtigt.

Um einen Sauerstoffeintrag in die Faser oder allgemein die Durchführung umständlicher Härtungsprozesse zu vermeiden, ist vorgeschlagen worden, die Methylchlordisilan-Gemische aus der Müller-Rochow-Synthese unter Katalyse mit Lewisbasen zu Oligosilanen zu disproportionieren und gezielt thermisch zu vernetzen, so dass diese unschmelzbar werden und daher nicht gehärtet werden müssen. Nachteilig an diesen Fasern ist jedoch, dass sie einen sehr hohen Chorgehalt (zwischen 8 und 12 Masse-%) aufweisen, was sie korrosionsanfällig macht. Der Chlorgehalt lässt sich zwar durch Temperaturbehandlung von etwa 1800°C reduzieren, jedoch wird die Faser dabei stark geschädigt. Auch ein Austausch des Chlors mittels Reaktivgasen wie Wasserstoff oder Ammoniak führt zu einer Reduzierung der mechanischen Festigkeit der Faser.

Aus diesem Grund ist in der WO2010072739 vorgeschlagen worden, dass das Produkt der Disproportionierungsreaktion mit einem Substitutionsmittel umgesetzt wird, so dass das gebundene Chlor durch einen chlorfreien Substituenten ersetzt wird. Das substituierte Produkt kann dann mittels einer thermischen Vernetzung zu einem chlorfreien Polysilan prozessiert werden, das keinen Sauerstoff enthält und zu Siliciumcarbid-Fasern weiter verarbeitet werden kann. Diese thermische Nachvernetzung ist jedoch kostenintensiv und wenig reproduzierbar und sollte vermieden werden. Ferner ist die Ausbeute an Polysilan nach der thermischen Nachvernetzung relativ gering, unter anderem, da das Polysilan nach der Vernetzung neu gelöst werden muss, wobei unlösliches Produkt verloren geht. Zusätzlich entstehen bei der thermischen Vernetzung der dechlorierten Oligosilane hochreaktive Spaltprodukte. Diese müssen technisch aufwendig entfernt werden. Leider ist eine Weiterverarbeitung des Polysilans ohne adäquate Alternative zum thermischen Nachvernetzen nicht möglich, da das Polymer ein hohes Molekulargewicht braucht, um für den Spinnprozess geeignet zu sein.

Daher ist es die Aufgabe der vorliegenden Erfindungen ein kostengünstiges und reproduzierbares Verfahren mit hoher Ausbeute zur Herstellung von chlorfreiem und unschmelzbarem, aber löslichen Polysilanen vorzusehen, die sich ausgezeichnet zur Herstellung von Grün-und Keramikfasern verwenden lassen sowie die Bereitstellung der hergestellten Grün-und Keramikfasern.

Erfindungsgemäß wird diese Aufgabe dadurch gelöst, dass ein Verfahren zur Herstellung eines Polysilans vorgesehen ist, das die folgenden Schritte umfasst:
(i) eine Disproportionierungsreaktion von einem Methylchlordisilan-Gemisch zu einem Chlor-haltigen Oligosilan,
(ii) eine Substitutionsreaktion der im Oligosilan enthaltenen Chloratome durch Umsetzung mit einem primären Amin,
(iii) eine Vernetzungsreaktion der Oligosilane unter Einsatz eines Kettenbildners zu Polysilanen, dadurch gekennzeichnet, dass der Kettenbildner mindestens zwei nucleophile Gruppen aufweist.

Diese Lösung führt zu einem nahezu chlorfreien Polysilan (weniger als 1 % Chloranteil, vorzugsweise weniger als 0,3 % Chloranteil) in einer sehr hohen Ausbeute. Ferner ist das Verfahren kostengünstig und schnell und kann bei geringen Reaktionstemperaturen durchgeführt werden. Während der Reaktion bilden sich keine Kondensate, die abgeführt werden müssen, so dass diese Herstellungsprozedur von Polysilan auch bei großen Produktionsmengen an Polysilan sicherheitsrelevant unkritisch ist. Die Polysilane sind ausgezeichnet zu Grünfasern verarbeitbar und bei den Verarbeitungstemperaturen unschmelzbar. Die Polysilane sind gut löslich, so dass auch für die Weiterverarbeitung zu Grünfasern eine hohe Ausbeute erzielt werden kann.

Vorzugsweise handelt es sich bei dem Methylchlordisilangemisch um ein Gemisch aus 1,1,2,2-Tetrachlor-dimethyldisilan und 1,1,2-Trichlor-trimethyldisilan mit vorzugsweise weniger als 10 mol% anderen Bestandteilen, das ein Nebenprodukt der industriell eingesetzten Rochow und Müller-Synthese ist, was das Ausgangsgemisch der vorliegenden Reaktion zu einem kostengünstigen Ausgangsmaterial macht. Generell sind die eingesetzten Methylchlordisilane dadurch charakterisiert, dass sie vorzugsweise eine Zusammensetzung von Si₂MeₙCl₆₋ₙ aufweisen, wobei n die Werte 1, 2, 3 oder 4 annehmen kann.

Es ist bevorzugt, dass die genannten Methylchlordisilan-Gemische unter homogener Katalyse mit einer stickstoffhaltigen Lewis-Base und vorzugsweise bei erhöhter Temperatur disproportioniert werden, wobei die während der Reaktion als Spaltprodukte anfallenden Monosilan-Gemische kontinuierlich abdestilliert werden. Die Reaktionstemperatur beträgt vorzugsweise 150-300 °C, stärker bevorzugt 200-250 °C. Als Katalysator wird eine organische Stickstoffverbindung mit Lewis-Basizität, jedoch ohne N-H-Funktion, eingesetzt. Bevorzugte Katalysatoren sind stickstoffhaltige Heterocyclen wie Pyridin, Chinolin, N-Methylpiperidin, N-Methylpyrrolidin, N-Methylindol oder N-Methylimidazol. Die Menge an eingesetztem Katalysator beträgt bevorzugt 1 bis 2 Masse-%. Die Disproportionierung findet unter den in der Literatur bekannten Bedingungen statt (siehe z.B. WO2010072739). Insbesondere ist es günstig, Feuchtigkeit und Sauerstoff durch die Verwendung von Inertgas wie Stickstoffreinstgas von den Materialien fernzuhalten, da das Produkt sauerstoffempfindlich ist. Als besonders vorteilhaft für die Herstellung des Oligosilans erweist sich der Zusatz eines Vernetzungs-Hilfsmittels. Dieses Vernetzungs-Hilfsmittel kann ein Arylhalogensilan, ein Arylhalogenboran oder ein Gemisch dieser Verbindungen sein. Bevorzugt werden als Vernetzungs-Hilfsmittel Phenyltrichlorsilan, Diphenyldichlorsilan und Phenyldichlorboran eingesetzt, besonders bevorzugt Phenyltrichlorsilan. Die Menge an eingesetztem Vernetzungs-Hilfsmittel bei der Disproportionierungsreaktion beträgt bevorzugt 5 bis 20 Masse-%, stärker bevorzugt 10 bis 15 Masse-%.

Die Chlorsubstitution, der Schritt (ii) nach Anspruch 1 im Herstellungsprozess des Polysilans, wird am Produkt der Disproportionierung oder vergleichbaren Umsetzung zu einem Roh-Oligosilan, durchgeführt, um die Menge an Chlor zu reduzieren. Die Chlorreduzierung durch Substitution von Chloratomen erfolgt mit Hilfe von Amin- und/oder Silylaminverbindungen, d.h. Verbindungen, die mindestens eine N-Si-Gruppierung oder, stärker bevorzugt, mindestens eine N-H-Gruppierung aufweisen. In einer ersten Ausgestaltung der Erfindung sind sie vorzugsweise ausgewählt unter Ammoniak und primären oder sekundären Aminen. Geeignet sind insbesondere Amine der Formel HNR¹R², worin R¹ und R² unabhängig voneinander Wasserstoff, ggf. mit weiteren Aminogruppen substituiertes Alkyl, Alkenyl, Aryl, Arylalkyl, Alkylaryl, Arylalkenyl, Alkenylaryl oder (R³)₃Si-[NR³-Si(R³)₂]ₘ mit m = 0 bis 6 sind, oder worin R¹ und R² zusammen einen Alkylenrest mit 4 oder 5 Kohlenstoffatomen oder - Si(R³)₂-[NR³-Si(R³)₂]ₙ- mit n = 1 bis 6 darstellen. In einer zweiten Ausführungsform werden Silylamine, insbesondere Silazane der Formel Si(R³)₃-[NR³-Si(R³)₂]ₙ-R³ eingesetzt, worin n eine ganze Zahl von 1 bis 6 sein kann. Jeder Rest R³ ist in allen Fällen gleich oder verschieden und bedeutet Wasserstoff, Alkyl oder Aryl. In einer dritten, bevorzugten Ausgestaltung handelt es sich bei den Verbindungen um sekundäre, cyclische Amine, insbesondere ausgewählt unter Pyrrol, Indol, Carbazol, Pyrazol, Piperidin und Imidazol. In einer vierten Ausführungsform erfolgt die Substitution mit einer Verbindung der Formel N(R⁴)₃, worin R⁴ die Bedeutung (R³)₃ Si hat.

Die Zahl der Aminogruppen in R¹ und R² ist nicht beschränkt, beträgt bevorzugt jedoch 0 bis 6 und stärker bevorzugt 0 bis 4. Die Zahl der Kohlenstoffatome in R¹, R² und R³ ist ebenfalls nicht beschränkt, beträgt bevorzugt jedoch 1 bis 6 für aliphatische und 5 bis 20 für aromatische und aliphatisch-aromatische Reste.

Stärker bevorzugt werden die Amine ausgewählt unter Ammoniak, Ethylendiamin, Diethylamin, Dimethylamin, Methylamin, Anilin, Ethylamin, Hexamethyldisilazan, Heptamethyldisilazan und Tris-(trimethylsilyl)amin. Besonders bevorzugt sind solche Amine unter den vorgenannten, die kurzkettige Alkylreste, insbesondere Methyl- und Ethylreste, tragen. Dimethylamin ist besonders günstig. Sekundäre Amine haben den Vorteil, dass die damit erhaltenen Polymere -NR²-Gruppen tragen, also frei von NH-Funktionen sind. Der Vorteil liegt darin, dass bei der nachfolgenden Vernetzung solcher derart substituierter Polysilan/Oligosilane eine Polykondensation von Aminogruppen unmöglich ist, die zu schlechter oder gar nicht mehr löslichen Produkten führen könnte, was erfindungsgemäß natürlich nicht gewünscht ist. Dennoch sind Silylamine wie Disilazane anstelle von reinen Aminen ebenfalls geeignet, da der Eintrag von Siliciumatomen bei der Substitution keine nachteiligen Effekte für die späteren Formkörper bzw. Fasern nach sich zieht. Die Substitution mit Silylaminen hat außerdem den Vorteil, dass das Chlor nicht in Form eines Ammoniumsalzes, sondern in Form von Trimethylchlorsilan anfällt, das destillativ abgetrennt und in die Prozesskette zurückgeführt werden kann.

Die Chlorreduzierung/Substitution findet in der Regel folgendermaßen statt:
Das Ausgangsmaterial, d.h. das Kohlenwasserstoffgruppen tragende/enthaltende, durch die oben beschriebene Disproportionierung erhaltene Roh-Polysilan/Oligosilan wird in einem geeigneten inerten und aprotischen Lösungsmittel gelöst. Als Lösemittel kommen vor allem aprotische, unpolare Lösemittel wie aliphatische Kohlenwasserstoffe (z.B. n-Pentan, n-Hexan, Cyclohexan, n-Heptan, n-Octan), halogenierte Kohlenwasserstoffe (z.B. Methylenchlorid, Chloroform, Tetrachlorkohlenstoff, 1,1,1-Trichlorethan, Chlorbenzol) oder aromatische Kohlenwasserstoffe (z.B. Benzol, Toluol, o-Xylol, sym-Mesitylen) in Frage, des Weiteren etherhaltige Lösungsmittel (z.B. Diethylether, Diisopropylether, Tetrahydrofuran, 1 ,4-Dioxan oder ein höherer oder nichtsymmetrischer Ether). Das Lösemittel ist bevorzugt ein halogenfreier Kohlenwasserstoff, besonders bevorzugt ein aromatischer Kohlenwasserstoff aus der Gruppe Benzol, Toluol, o-Xylol.

Das Substitutionsmittel (Amin) wird in einem molaren Überschuss zugegeben, der vorzugsweise mindestens 2:1 beträgt, bezogen auf die gebundenen Chloratome im Ausgangsmaterial. Das Substitutionsmittel wird unverdünnt oder in einem inerten und aprotischen Lösungsmittel wie oben angegeben gelöst zugegeben. Das Zugeben kann z.B. durch Zutropfen erfolgen; dabei sollte vorzugsweise eine Temperatur zwischen Raumtemperatur und dem Siedepunkt des Amins bzw. dessen Lösung eingehalten werden. Beim oder nach dem Zutropfen bildet sich ein Salz, das im Lösungsmittel unlöslich ist, oder - im Falle der Substitution mit Silylaminen - Trimethylchlorsilan. Die Suspension wird einige Zeit, häufig mehrere Stunden, stehengelassen oder bis zur Siedehitze des Lösungsmittels unter Rückfluss gekocht. Anschließend wird sie ggf. auf Raumtemperatur abgekühlt, und sofern sich Salz gebildet hat, wird dieses abfiltriert. Darauf folgend wird das Lösungsmittel sowie ggf. gebildetes Trimethylchlorsilan vollständig entfernt, beispielsweise im Vakuum.

Bei Anwendung eines Amins, das während der Zugabe zum Roh-Polysilan/Oligosilan gasförmig vorliegt, z.B. bei Anwendung von Ammoniak, kann dieses als Gas eingeleitet oder aber entweder bei Temperaturen unterhalb seines Siedepunktes in ein Reaktionsgefäß einkondensiert oder unter Überdruck als Flüssigkeit in dieses eingefüllt werden, im Falle verflüssigter Amine optional unter Verdünnung mit einem geeigneten Lösungsmittel wie voranstehend angegeben. Anschließend wird das Ausgangsmaterial, gelöst wiederum möglichst in demselben Lösungsmittel, zudosiert. Nach vollständiger Zugabe wird der Ansatz für einen ähnlichen Zeitraum wie den oben beschriebenen stehengelassen oder am Rückfluss gekocht und anschließend wie voranstehend beschrieben aufgearbeitet.

Der Chlorgehalt des so behandelten Ausgangsmaterials lässt sich durch den erfindungsgemäßen Verfahrensschritt in der Regel auf bis unter 0,2 Masse-% reduzieren.

Die erfindungsgemäße Vernetzungsreaktion Schritt (iii) nach Anspruch 1 führt unter Einsatz eines Kettenbildners zu Polysilanen. Der Kettenbildner weist mindestens zwei nucleophile Gruppen auf.

Vorzugsweise werden als Kettenbildner eine oder mehrere der Verbindungsklassen Diamine, Triamine, Diole und/oder Triole, sowie Polyamine, Polyole und/oder Polythiole eingesetzt. Der Einsatz dieser Kettenbildner führt zu einer effektiven Vernetzung der Oligosilane, großen Ausbeuten bei einer niedrigen Reaktionstemperatur und kurzer Reaktionsdauer und zu einem qualitativ hochwertigen Polysilan. Bevorzugt sind hierbei als nucleophile Gruppen die Aminogruppen. Vorzugsweise werden Diamine und/oder Triamine eingesetzt.

Noch bevorzugter werden als Kettenbildner eine oder mehrere der Verbindungen: 1,6-Diaminohexan, 1,4 Diaminobutan, 1,2-Ethylendiamin, Melamin, Triethylendiamin, Glycerin und/ oder Triethanolamin eingesetzt. Insbesondere 1,6-Diaminohexan führte dabei zu hohen Ausbeuten bei geringer Reaktionstemperatur und kurzen Reaktionszeiten.

Der Kettenbildner wird vorzugsweise in einer Konzentration von 1 bis 40 Masse-%, besonders bevorzugt von 1 bis 20 Masse-% und am meisten bevorzugt von 1 bis 10 Masse-% im Vergleich zum Oligosilan eingesetzt. Eine solche Konzentration führt zu einer optimalen Vernetzung mit dem gewünschten Molekulargewicht und Viskosität des Polysilanproduktes.

Insbesondere ist es überraschender Weise möglich im Vergleich zur thermischen Nachvernetzung die Vernetzungsreaktion bei einer moderaten Temperatur in einem Bereich von vorzugsweise 50 bis 150 °C und besonders bevorzugt in einem Bereich von 65 bis 120°C und noch mehr bevorzugt in einem Bereich von 100 bis 112°C durchzuführen. Auch kann die benötigte Zeit für die Nachvernetzung verringert werden. Bevorzugt beträgt diese 1 bis 3 h.

Auf Grund des besonders bevorzugten Temperaturbereichs ist es bevorzugt Toluol als Lösungsmittel für die Vernetzungsreaktion einzusetzen, zumal der Einsatz von Toluol zu sehr hohen Ausbeuten von fast 100 % führt, da die in der Vernetzungsreaktion erhaltenen Polysilane gut in Toluol löslich ist. Weitere geeignete Lösungsmittel sind Tetrahydrofuran, Dioxan, Benzol, Xylol sowie andere nicht protische organische Lösungsmittel.

Ferner umfasst die Erfindung ein Polysilan, das nach der vorliegenden Erfindung hergestellt worden ist, sowie ein Verfahren zu Herstellung von Siliciumcarbid-Fasern.

Vorzugsweise weist das Polysilan eine molekulare Masse (Mw) größer oder gleich 2000 g/mol auf. Weiterhin bevorzugt weist das Polysilan ein Molekulargewicht Mw von 1000 bis 10000 g/mol, bevorzugt 2000 bis 4000 g/mol, am meisten bevorzugt von 2500 bis 3500 g/mol und eine bimodale Molekulargewichtsverteilung.

Das Molekulargewicht (Mw) wird bevorzugt mittels einer Gelpermeationschromatographie bestimmt.

Weiterhin beträgt bei dem erfindungsgemäßen Polysilane die Polydispersität 1 bis 5, bevorzugt 1,5 bis 4, am meisten bevorzugt 2,5 bis 3,5, welches durch eine gezielt bimodale Molekulargewichtsverteilung erreicht wird. Die Bimodalität kann dadurch erreicht werden, dass nicht sämtliche Oligosilan-Moleküle im Polymer eingebaut werden. Je mehr Kettenbildner eingesetzt wird, desto mehr Oligosilan wird umgesetzt, dadurch wird ein höheres Molekulargewicht des Polymers erzeugt und gleichzeitig die Polydispersität erhöht. Dies gilt für die hierin beschriebene Menge an eingesetztem Kettenbildner.

Das erfindungsgemäße Verfahren zur Herstellung von Siliciumcarbid-Fasern ist vorzugsweise dadurch gekennzeichnet, dass die erfindungsgemäß hergestellten Polysilane zu Polysilanfasern versponnen werden und die Polysilanfasern durch Pyrolyse und gegebenenfalls vorzugsweise durchSinterung in Siliciumcarbid-Fasern umgewandelt werden. Die Pyrolyse und die Sinterung können dabei nach allen dem Fachmann bekannten Protokollen erfolgen.

Vorzugsweise wird das erfindungsgemäße Polysilan im Trockenspinnverfahren zu Fasern verarbeitet. Das erfindungsgemäße Polysilan kann aber auch im Nassspinnverfahren verarbeitet werden.

Grundsätzlich kann der Prozess des Trockenspinnens auf alle dem Fachmann bekannten Weisen durchgeführt werden. Als Lösemittel für das Polysilan kommen vor allem organische Lösungsmittel wie aliphatische Kohlenwasserstoffe (z.B. n-Pentan, n-Hexan, Cyclohexan, n-Heptan, n-Octan), aromatische Kohlenwasserstoffe (z.B. Benzol, Toluol, o-Xylol, sym-Mesitylen), halogenierte Kohlenwasserstoffe (z.B. Methylenchlorid, Chloroform, Tetrachlorkohlenstoff, 1,1,1-Trichlorethan, Chlorbenzol) oder Ether (z.B. Diethylether, Diisopropylether, Tetrahydrofuran, 1,4-Dioxan oder ein höherer oder nicht-symmetrischer Ether) in Frage. Das Lösemittel ist bevorzugt ein halogenierter oder halogenfreier Kohlenwasserstoff, besonders bevorzugt ein halogenfreier aromatischer Kohlenwasserstoff aus der Gruppe Benzol, Toluol, o-Xylol.

Auf Grund ihrer ausgezeichneten Löslichkeit ist ein sauberes Spinnen im Trockenspinnprozess möglich. Dadurch lassen sich dünnere Faserdurchmesser erhalten und es kommt zu weniger Faserabrissen im Spinnprozess. Ferner zeigen die erfindungsgemäßen Polysilane eine gute Elastizität, die sie hervorragend geeignet für den Spinnprozess macht.

Auf Grund der hohen Qualität des Polysilans lässt es sich besonders gut zu Fasern verspinnen.

Insbesondere weist das erfindungsgemäße Polysilan auch bei hohen Konzentrationen von 70 bis 90 Gewichtsprozent im Lösungsmittel eine sehr gute Löslichkeit auf. Da es gleichzeitig bei Konzentrationen von 70 bis 90 Gewichtsprozent in Toluol oder Dioxan bei 30 °C eine geringe Viskosität von 50 bis 150 Pas bei der Verarbeitungstemperatur aufweist, kann das erfindungsgemäße Polysilan damit in hoher Konzentration verarbeitet werden.

Vorzugsweise weist das Polysilan eine Viskosität bei 25°C in einer 50 gew% Lösung in Toluol von 5 bis 50mPas aufweist, bevorzugt 15 bis 30 mPas auf. Solch niedrige Viskositätswerte sind vorteilhaft für den Trockenspinnprozess, da das Polysilan sich leichter verarbeiten lässt.

Die daraus erhaltenen hoch qualitativen Fasern können anschließend zu SiC-Keramiken direkt pyrolisiert werden, ohne dass sie gehärtet werden müssen. Es ergibt sich dem Fachmann aber von selbst, dass die erhaltenen Fasern gehärtet werden können. Die erfindungsgemäß hergestellten Fasern zeichnen sich daher dadurch aus, dass sie nicht gehärtet werden müssen, aber alternativ auch gehärtet werden können. Die Messung der Viskosität kann der Fachmann mit den bekannten Methoden aus dem Stand der Technik vornehmen.

Zur weiteren Qualitätskontrolle der Verspinnbarkeit des Polysilans wurde ein Trockenspinnverfahren bei einer Viskosität des Polysilans von 10 bis 160 Pas durchgeführt. Neben der Löslichkeit des Polysilans wurde als weiterer Qualitätsparameter die Faserfilamentbestandsabnahme pro Stunde in Prozent ermittelt. Dieser Wert beschreibt die Geschwindigkeit der Abnahme der Anzahl an Filamenten im Faserbündel während des Trockenspinnens und berechnet sich aus dem Quotienten der Filamentanzahl zum Zeitpunkt n und der Filamentanzahl zum Zeitpunkt n minus 1h im Faserbündel. Die Filamentanzahlt wurde dabei optisch bestimmt und dokumentiert. Vorzugsweise ist das erfindungsgemäße Polysilan und auch dessen Herstellungsverfahren dadurch charakterisiert, dass die Faserfilamentbestandsabnahme pro Stunde einen Wert von 0 bis 75 %, vorzugsweise von 0 bis 60 %, besonders bevorzugt von 0 bis 40 %, noch mehr bevorzugt von 0 bis 30 % und noch mehr bevorzugt von 0 bis 20% aufweist. Vergleichsmessungen mit Polysilan aus dem Stand der Technik ergaben Werte für die Faserfilamentbestandsabnahme von 80%. Das erfindungsgemäße Polysilan und dessen Herstellungsverfahren führen demnach zu geringeren Faserfilamentbestandsabnahmen als der Stand der Technik. Vorzugsweise ist es möglich das erfindungsgemäße Polysilan während des Trockenspinnens mit Verstreckungsfaktoren von mindestens 6, vorzugweise mindestens 7, am meisten bevorzugt von mindestens 8 zu Fasern zu verspinnen. Es ist besonders bevorzugt, dass die Verstreckungsfaktoren eine Größe von 5 bis 10, vorzugsweise von 6 bis 8 aufweisen. Es ist hierbei vorteilhaft hohe Verstreckungsfaktoren zu verwenden, da dadurch bei gleichem Düsendurchmesser dünnere Filamente erzeugt werden können. Der Verstreckungsfaktor ergibt sich aus dem Verhältnis der Durchtrittsfläche der Düse und der Querschnittsfläche der Faser. Dünnere Filamente sind attraktiv für die spätere Verarbeitung der Fasern, daher ist der Einsatz von höheren Verstreckungsfaktoren wünschenswert, was durch die Verwendung des erfindungsgemäßen Polysilans nun möglich ist.

Das Trockenspinnen wird vorzugsweise an einer Spinnapparatur, bestehend aus einen Vorratsgefäß, einer Zahnradpumpe und einem Düsenkopf bei einer Temperatur von 30°C, mit einer Spinndüse mit einem Durchmesser von 75 µm. Die resultierenden Drücke betragen 5-250 bar. Der Spinnschacht enthält eine Stickstoffatmosphäre mit 30°C. Bei einer Abzugsgeschwindigkeit von 50-200 m/min können Verstreckungsfaktoren von mindestens 6-8 realisiert werden.

Auf Grund der Unschmelzbarkeit der erfindungsgemäßen Polysilane sind die Polysilan-Fasern unter Verwendung einer Pyrolyse und vorzugsweise einer anschließenden Sinterung zu Siliciumcarbid-Fasern verarbeitbar, ohne dabei zu schmelzen.

Ein weiterer Aspekt der vorliegenden Erfindung ist demnach eine Siliciumcarbid-Faser, ausgehend von dem erfindungsgemäßen Polysilan, bzw. Fasern daraus, durch Pyrolyse der Polysilan-Fasern und vorzugsweise anschließender Sinterung hergestellt sind. Überraschenderweise wurde gefunden, dass die Polysilan-Faser eine von bekannten Polysilan-Fasern unterschiedliche Oberflächenstruktur aufweist, und darüber hinaus, dass diese Oberflächenstruktur in der Siliciumcarbid-Faser, welche aus der erfindungsgemäßen Polysilan-Faser hergestellt ist, erhalten bleibt. Die erfindungsgemäße Siliciumcarbid-Faser weist eine charakteristische, nicht kreisrunde Querschnittsfläche auf. Diese Oberflächenstruktur bringt den Vorteil mit sich, dass die Infiltration eines aus den Siliciumcarbid-Fasern bestehenden Fasermaterials mit einem flüssigen Matrixmaterial zu einem dichterem Verbund führt, da weniger Gaseinschlüsse zurück bleiben, bzw. beim Infilrtieren entstehen. Dies liegt, ohne an die Theorie gebunden sein zu wollen, daran, dass die Fasern untereinander keine, oder eine im geringeren Maße dichte Kontaktfläche ausbilden.

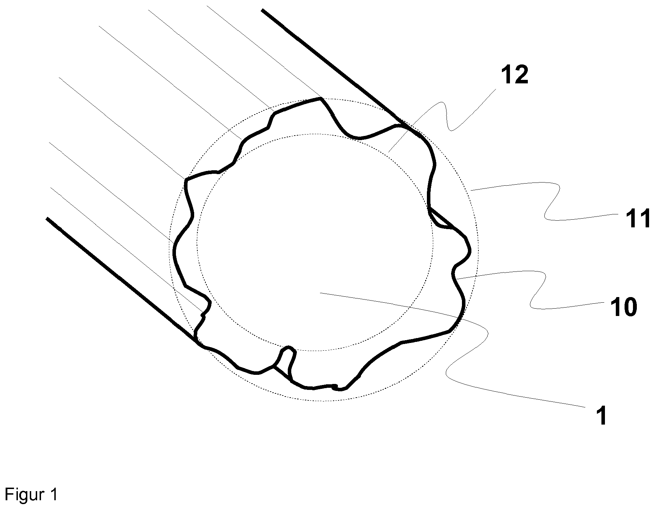

Eine Ausführungsform der erfindungsgemäßen Siliciumcarbid-Faser besitzt eine Querschnittsfläche (1), wie sie in Figur 1 zu sehen ist. Eine bevorzugte Siliciumcarbid-Faser hat demnach eine Querschnittsfläche (1) mit einer welligen Begrenzungslinie (10). Der Grad der Welligkeit lässt sich folgendermaßen beschreiben. Figur 1 zeigt den welligen Querschnitt (10), einen äußeren einhüllenden Kreis (11) sowie die größtmögliche Kreisfläche (12) innerhalb der Faserquerschnittsfläche (1). Die äußere Kreisfläche (11) ist mindestens 5%, bevorzugt mindestens 10%. Dabei wechselt die Krümmung der Begrenzungslinie (10) mehrfach das Vorzeichen. Wobei mindestens zwei Krümmungsradien mit unterschiedlichen Vorzeichen einen Betrag von jeweils mindestens 1 µm aufweisen. Ein einfacher ovaler Faserquerschnitt, ist von der erfindungsgemäßen Querschnitts nicht umfasst, wobei eine wellige, aber grundsätzlich ovale Querschnittsfläche wiederum von der erfindungsgemäßen Querschnittsfläche eingeschlossen ist.

Vorzugsweise weist das Polysilan eine keramische Ausbeute bei der Pyrolyse bis 800°C von mindestens 60 % auf. Hierbei ist die keramische Ausbeute als Restmasse nach der Pyrolyse unter Schutzgas bis 800°C bei einer Heizrate von 10 K/min definiert. Daher weist das erfindungsgemäße Polysilan eine sehr gute Ausbeute nach der Pyrolyse auf.

Grundsätzlich kann die Pyrolyse oder die Sinterung auf alle dem Fachmann bekannten Weisen und mit jedem Temperaturprofil durchgeführt werden. Gute Ergebnisse werden dabei jedoch insbesondere erhalten, wenn die Pyrolyse unter Sauerstoffausschluss, also in einer Intergasatmosphäre, wie Stickstoff, so durchgeführt wird, dass die Maximaltemperatur 400 bis 1200 °C, bevorzugt 600 bis 1000 °C und besonders bevorzugt 800 bis 900 °C beträgt. Bei der Pyrolyse ist die Aufheizrate auf einen Wert zwischen 0,1 und 200 K/Min., bevorzugt zwischen 0,5 und 50 K/Min., besonders bevorzugt zwischen 0,75 und 10 K/Min. und ganz besonders bevorzugt auf einen Wert von etwa 1,0 K/Min. einzustellen. Bei 400 bis 500 °C wird die Umwandlung des Polysilans zu dem Siliciumcarbid abgeschlossen. Die Sinterung erfolgt vorzugsweise bei Temperaturen zwischen 800 und 2000°C unter einer Inertgasatmosphäre wie vorzugsweise unter Argon, Stickstoff oder einem Stickstoff-Wasserstoff-Gemisch, sowie bei Heizraten von 1 bis 150 K/min. Dies hat den Vorteil, dass sich durch die Erhöhung der Temperatur, jedoch unter die Schmelztemperatur, das Polymergefüge ändert und die mechanischen Eigenschaften der Faser verbessert werden. Im Zuge der Sinterung kommt es zu keiner Verbindung der einzelnen Fasern.

Die erfindungsgemäße Siliciumcarbid-Keramik weist eine Elementzusammensetzung von 20 bis 45 Gew.-%, bevorzugt 23 bis 40 Gew.-% Kohlenstoff, 5,0 bis 8,0 Gew.-% Stickstoff, 0,0 bis 4,0 Gew.-% Sauerstoff, 0,0 bis 2,0 Gew.-% Chlor und 48 bis 72 Gew.-% Silicium auf.

Gemäß einer Ausführunsform weist die erfindungsgemäße Siliciumcarbid-Keramik in Form von Siliciumcarbid-Fasern eine Elementzusammensetzung von 38 bis 40 Gew.-% Kohlenstoff, 7,0 bis 8,0 Gew.-% Stickstoff, 2,0 bis 3,0 Gew.-% Sauerstoff, 1,0 bis 1,5 Gew.-% Chlor und 48 bis 50 Gew.-% Silicium auf.

Ferner umfasst die Erfindung einen Faserverbundwerkstoff, dadurch gekennzeichnet, dass er eine erfindungsgemäße Siliciumcarbid-Faser sowie ein Matrixmaterial umfasst.

Ebenfalls können die erfindungsgemäß hergestellten Polysilan-Fasern in einem Faserverbundwerkstoff eingesetzt werden, dadurch gekennzeichnet, dass der Faserverbundstoff eine erfindungsgemäße Polysilan-Faser sowie ein Matrixmaterial umfasst. Gegebenfalls wird die Polysilanfaser durch eine Behandlung, vorzugsweise eine Pyrolyse, des Verbundwerkstoffes in eine Keramikfaser umgewandelt.

Dabei können die Fasern oder die Matrix aus dem erfindungsgemäßen Siliciumcarbid sowie den Stoffsystemen SiC, SiCN, SiBNC, Al₂O₃, SiO₂, TiO₂, ZrO₂ (sowie Mischungen daraus) zusammengesetzt sein, wobei es bevorzugt ist, dass sowohl die Fasern als auch die Matrix aus dem erfindungsgemäßen Siliciumcarbid zusammengesetzt sind.

Ferner können die Polymer- oder Keramikfasern in Form von Gelegen, Fasermatten, Geweben, Gewirken, Gestricken, Vliesen und/oder Filzen vorliegen, wobei Gelege und/oder Fasermatten bevorzugt sind.

Zur Herstellung des erfindungsgemäßen Verbundwerkstoffs können wie vorstehend hergestellte Siliciumcarbid-Fasern oder andere Keramikfasern, vorzugsweise SiCN-Fasern, enthaltende Faserstrukturen mit dem erfindungsgemäß beschriebenen Polysilan oder anderen Polymerprecursoren imprägniert und anschließend pyrolysiert werden. Das bedeutet, es können sowohl die Fasern als auch die Matrix des erfindungsgemäßen Verbundwerkstoffs aus dem erfindungsgemäßen Siliciumcarbid zusammengesetzt sein. Weitere mögliche andere Stoffsysteme für Fasern oder Matrix sind SiCN, SiBNC, Al₂O₃, SiO₂, TiO₂, ZrO₂ sowie Mischungen daraus, wobei es bevorzugt ist, dass sowohl die Fasern als auch die Matrix aus dem erfindungsgemäßen Siliciumcarbid zusammengesetzt sind.

Optional kann zwischen dem Imprägnieren und dem Pyrolysieren eine Härtung durchgeführt werden, wobei das Härten physikalisch oder chemisch, beispielsweise mit UV-Licht und/oder durch Temperaturbehandlung erfolgen kann. Danach kann der so hergestellte Körper ein- oder mehrmals mit Polysilan imprägniert, gehärtet und pyrolysiert werden.

Weiterhin kann das beschriebene Polysilan als Lösung auf beliebige Fasern oder Formkörper aufgetragen werden und stellt nach der Pyrolyse einen Schutz, beispielsweise einen Oxidationsschutz dar. Aufgrund seiner hervorragenden Eigenschaften, insbesondere seiner hervorragenden Hochtemperaturbeständigkeit und hohen Härte, eignen sich das erfindungsgemäße Polysilan, die erfindungsgemäße Siliciumcarbid-Faser sowie hergestellte Siliciumcarbid-Formkörper und erfindungsgemäße Siliciumcarbid-haltige Faserverbundwerkstoffe erfindungsgemäße Formkörper und/oder Faserverbundwerkstoff insbesondere für Anwendungen, in denen das Material hohen Temperaturen und oxidativen Bedingungen ausgesetzt sind, und zwar beispielsweise im Leichtbau, in der Elektroindustrie, in der Raumfahrt, im Kraftfahrzeugbau und im Flugzeugbau.

### Beispiele

Nachfolgend wird die vorliegende Erfindung anhand von erfindungsgemäßen Ausführungsbeispielen im Vergleich zu einem Vergleichsbeispiel, das ohne Vernetzungsreaktion sondern mit einer thermischen Vernetzung hergestellt worden ist, beschrieben, welche die vorliegende Erfindung erläutern, aber nicht beschränken. Das Vergleichsbeispiel und das Ausführungsbeispiel werden in Bezug auf die benötigte Reaktionstemperatur, Zeit und Ausbeute miteinander verglichen. Zusätzlich werden in Tabelle 1 die Konzentration an Polysilan, die für das Trockenspinnen eingesetzt werden kann, also die Konzentration an Polysilan, die sich noch löst, die Viskosität, die Spinnbarkeit und die Pyrolisiereigenschaft des Polysilans für das erfindungsgemäße Polysilan nach Ausführungsbeispiel 1, für das Vergleichsbeispiel und für das Oligosilan miteinander verglichen.

Die Viskosität des Polysilans oder der Spinnmassen wurden mit einem Rotationsrheometer Physica MCR 301 der Firma Anton Parr bestimmt. Die Messungen erfolgten mit einer PLatte/Platte geometrie mit ca. 300-500 mg der jeweiligen Probe. Die Viskosität der verdünnten Polymerlösungen wurden an einem Kugelfallviskosimeter der Firma HAAKE bei 25°C in 50 %iger Lösung mit einer 16,25g Stahlkugel gemessen.

Vergleichsbeispiel aus dem Stand der Technik nach WO2010072739:
Die Herstellung des Vergleichsbeispiels erfolgt in drei Schritten, nämlich erstens der Herstellung eines Oligosilans, zweitens der Modifizierung des Oligosilans mit gasförmigem Dimethylamin und drittens der thermischen Vernetzung eines mit Dimethylamin modifizierten Oligosilans.

### Schritt 1: Herstellung eines Oligosilans durch Disproportionierung

600 g eines Methylchlordisilan-Gemischs ("Disilan-Fraktion" aus einem Müller-Rochow-Prozeß, bestehend aus je 45 mol-% Cl₂MeSiSiMeCl₂ und Cl₂MeSiSiMe₂Cl sowie 10 mol-% ClMe₂SiSiMe₂Cl; Kp. 150-155 °C) werden mit 14 g N-Methylimidazol und 69 g Phenyltrichlorsilan versetzt und mit 0,5 K/min auf 180 °C erhitzt. Hierbei werden ca. 450 ml eines Destillats erhalten, das aus MeSiCl₃, Me₂SiCl₂ und Me₂ClSiSiMe₂Cl besteht, sowie 153 g eines dunkelbraunen, bei Raumtemperatur festen, Hydrolyse- empfindlichen Oligosilans mit einem Chlorgehalt von ca. 25 Masse-%. Dieses wird in Toluol oder Xylol zu einer 60 Masse-% Oligosilan enthaltenden Lösung gelöst

### Schritt 2: Modifizierung eines Oligosilans mit gasförmigem Dimethylamin

In einem doppelwandigen 21-Reaktionsgefäß mit Bodenventil, Rückflusskühler, KPG-Rührer, Innenthermometer und Gaseinleitungsrohr werden 1500 ml einer 60 %igen Lösung eines durch Disproportionierung der "Disilan-Fraktion" erhaltenen Oligosilans in Toluol oder Xylol vorgelegt und auf 0 °C gekühlt. Anschließend werden unter kräftigem Rühren innerhalb von 3 h ca. 700 g gasförmiges Dimethylamin unterhalb des Flüssigkeitsspiegels eingeleitet. Die Temperatur des Gemischs steigt hierbei auf 30-35 °C und fällt gegen Ende der Reaktion wieder. Das Produkt wird über das Bodenventil unter Überschleierung mit Argon abgelassen und das ausgeschiedene Dimethylammoniumchlorid über eine Drucknutsche abfiltriert. Aus dem Filtrat wird das Lösungsmittel abdestilliert. Das modifizierte Oligosilan enthält noch ca. 1,5-2 Masse-% Chlor

Schritt 3: Thermische Vernetzung eines mit Dimethylamin modifizierten Oligosilans 600 g des modifizierten Oligosilan wird in einer Destillationsapparatur langsam auf eine Endtemperatur von ca. 400 °C erhitzt. Wählend des Erhitzens werden ca. 200 ml eines gelblichen Destillats erhalten; der Endpunkt der Vernetzung ist an der Verfestigung der Masse zu erkennen. Nach Abkühlen wird das erhaltene Copolymer, dessen Chlorgehalt jetzt nur noch ca. 0,5 Masse-% beträgt, in Toluol gelöst und kann in einem Trockenspinnprozess für die Herstellung von Grünfasern verwendet werden.

Die Ausbeute an Polysilan liegt bei gerundet 60 %. Bei der thermischen Vernetzung sind Temperaturen von über 300°C nötig, die Reaktionsdauer beträgt 4-6h. Die Viskosität des Polysilans beträgt bei 30°C 100 Pas. Die Konzentration an Polysilan, die für das Trockenspinnen eingesetzt werden kann beträgt 70 %. Das Polysilan spinnbar und sofort pyrolisierbar.

### Ausführungsbeispiel:

Für die Herstellung eines erfindungsgemäßen Polysilans können der erste und der zweite Schritt der Polysilanherstellung, nämlich die Disproportionierung und die Modifizierung mit gasförmigem Dimethylamin nach WO2010072739 (siehe Vergleichsbeispiel) durchgeführt werden. Der dritte Schritt des Herstellungsprozess, thermische Vernetzung nach WO2010072739, wird erfindungsgemäß nicht durchgeführt. Stattdessen erfolgt die Polymerisierung durch Vernetzung mit einem Kettenbildner. Erfindungsgemäß kann diese Vernetzungsreaktion nach folgendem Protokoll ablaufen:
In einem 2L Planflanschgefäß, ausgestattet mit einem Rückflusskühler, Argonanschluss und Ankerrührer, werden 1400g Oligosilanlösung (chlorfrei, 57%) vorgelegt. Der Reaktor wurde vorher durch Anlegen von Vakuum für 30min inertisiert und mit Argon geflutet. Als Kettenbildner werden 70g 1,6-Diaminohexan (Hexamethylendiamin, HMDA) in 233,3g Toluol unter Erwärmen (40°C) gelöst.

Diese Lösung wird bei Raumtemperatur im Argongegenstrom unter Rühren (108Upm) zum Oligosilan über einen Zeitraum von 2min zugegeben. Um das entstehende Dimethylamin (DMA) auszutreiben wird ein leichter Argonstrom (5cm3/min) in das Gefäß und durch den Kühler geleitet.

Die Reaktion wird gestartet, indem die Lösung innerhalb von 20-30 min zum Rückfluss erhitzt wird. Nach Erreichen der Refluxtemperatur (ca. 111°C) wird weitere 2h gerührt (108Upm).

Nach Ende der Reaktionszeit wird die Lösung abgekühlt und bei 30°C für 10min bei 100 mbar entgast. Die Lösung wird im Anschluss über einen 1 µm-Tiefenfilter mit 3 bar Stickstoff-Vordruck filtriert.

Das erfindungsgemäße Polysilan wird in einer Ausbeute von 95 % erhalten. Die maximale Reaktionstemperatur im Vernetzungsschritt beträgt in diesem Beispiel 111°C. Die Reaktionsdauer beträgt 2h. Im Vergleich zum Stand der Technik ist die Ausbeute deutlich höher, die Reaktionsdauer kürzer und die Reaktionstemperatur im letzten Schritt erniedrigt, daher ist das Verfahren kostengünstiger und schneller. Die Viskosität beträgt bei 30°C 100 Pas. Die Konzentration an Polysilan, die für das Trockenspinnen eingesetzt werden kann beträgt 85 % und ist damit höher als im Vergleichsbeispiel. Ferner ist das Polysilan spinnbar und sofort pyrolisierbar. Das Oligosilan hingegen ist weder spinnbar noch pyrolisierbar.

**Tabelle 1**

| | Oligosilan nach Schritt 2 des Vergleichsbeispiels | Vergleichsbeispiel | Ausführungsbeispiel |
|---|---|---|---|
| Konzentration (Gewichtsprozent) an Polysilan, die für das Trockenspinnen eingesetzt werden kann | 70 % | 70 % | 85 % |
| Viskosität bei 30°C | <1 Pas | 100 Pas | 100 Pas |
| Spinnbar | Nein | Ja | Ja |
| Sofort pyrolisierbar | Nein | Ja | Ja |

### Ausführungsbeispiel 2:

Die Reaktionsführung des Ausführungsbeispiels 2 erfolgt analog zur Durchführung in Ausführungsbeispiel 1. Anstelle des HMDA wird 1,2-Elhylendiamin als Kettenbildner eingesetzt.

### Ausführungsbeispiel 3:

Die Reaktionsführung des Ausführungsbeispiels 3 erfolgt analog zur Durchführung in Ausführungsbeispiel 1. Anstelle des HMDA wird Melamin als Kettenbildner eingesetzt.

### Ausführungsbeispiel 4:

Die Reaktionsführung des Ausführungsbeispiels 4 erfolgt analog zur Durchführung in Ausführungsbeispiel 1. Anstelle des HMDA wurde Triethylendiamin (TREN) als Kettenbildner eingesetzt.

### Ausführungsbeispiel 5:

Die Reaktionsführung des Ausführungsbeispiels 5 erfolgt analog zur Durchführung in Ausführungsbeispiel 1. Anstelle des HMDA wurde Glycerin als Kettenbildner eingesetzt.

### Ausführungsbeispiel 6:

Die Reaktionsführung des Ausführungsbeispiels 6 erfolgt analog zur Durchführung in Ausführungsbeispiel 1. Anstelle des HMDA wurde Triethanolamin als Kettenbildner eingesetzt.

### Ausführungsbeispiel 7:

Die Reaktionsführung des Ausführungsbeispiels 7 erfolgt analog zur Durchführung in Ausführungsbeispiel 1. Anstelle der angegeben Konzentration an HMDA können auch 1-20 mol% HMDA eingesetzt werden.

### Ausführungsbeispiel 8: Verarbeitung im Trockenspinnprozess

Das erfindungsgemäß hergestellte Polysilan wird mittels Trockenspinnverfahren zu Grünfasern verarbeitet. Dazu wird das Polysilan in Toluol THF oder Dioxan gelöst und mittels einer Pumpe bei 30°C durch die Spinndüse mit einem Durchmesser von 75 µm gefördert. Die resultierenden Drücke betragen 5-250 bar. Der Spinnschacht enthält eine Stickstoffatmosphäre mit 30°C. Bei einer Abzugsgeschwindigkeit von 50-200 m/min können Verstreckungsfaktoren von mindestens 6-8 realisiert werden. Es können geeignete Grünfasern für die Folgeschritte erhalten werden.

### Ausführungsbeispiel 9: Pyrolyse

Die gehärteten Fasern werden unter Schutzgasatmoshäre bis 1200°C pyrolysiert. Die Aufheizrate beträgt 10 K/min. Bei 400 bis 500 °C wird die Umwandlung des Polysilans zu dem Siliciumcarbid abgeschlossen.Es entstehen keramische SiCN-Fasern von beispielsweise einem Durchmesser von 19 bis 25 µm, die eine Zusammensetzung von 50 Gewichtsprozent an Silicium, 39 % Gewichtsprozent an Kohlenstoff, 7 Gewichtsprozent an Stickstoff, 3 Gewichtsprozent an Sauerstoff und 1 Gewichtsprozent an Chlor mittels Elementaranalyse aufweist.

## Patentansprüche

1. Verfahren zur Herstellung eines Polysilans umfassend die folgenden Schritte:
(i) eine Disproportionierungsreaktion von einem Methylchlordisilan-Gemisch zu einem Chlor-haltigen Oligosilan,
(ii) eine Substitutionsreaktion der im Oligosilan enthaltenen Chloratome durch Umsetzung mit einem primären Amin,
(iii) eine Vernetzungsreaktion der Oligosilane unter Einsatz eines Kettenbildners zu Polysilanen, **dadurch gekennzeichnet, dass** der Kettenbildner mindestens zwei nucleophile Gruppen aufweist.

2. Verfahren nach Anspruch 1, **dadurch gekennzeichnet, dass** als Kettenbildner Diamine, Triamine, Diole und/oder Triole, besonders bevorzugt 1,6-Diaminohexan, 1,2-Ethylendiamin, Melamin, Triethylendiamin, Glycerin und/ oder Triethanolamin verwendet werden.

3. Verfahren nach Anspruch 1 oder 2, **dadurch gekennzeichnet, dass** der Kettenbildner vorzugsweise in einer Konzentration von 1 bis 40 Masse-%, besonders bevorzugt von 1 bis 20 Masse-% und am meisten bevorzugt von 1 bis 10 Masse-% im Vergleich zum Oligosilan eingesetzt wird.

4. Ein Polysilan, das nach einem Verfahren gemäß Anspruch 1 bis 3 hergestellt worden ist.

5. Ein Polysilan nach Anspruch 4, **dadurch gekennzeichnet, dass** das Polysilan ein Molekulargewicht Mw von 1000 bis 10000 g/mol, bevorzugt 2000 bis 4000 g/mol, am meisten bevorzugt von 2500 bis 3500 g/mol und eine bimodale Molekulargewichtsverteilung und/ oder eine Polydispersität 1 bis 5, bevorzugt 1,5 bis 4, am meisten bevorzugt 2,5 bis 3,5 aufweist.

6. Polysilan nach Anspruch 4 oder 5, **dadurch gekennzeichnet, dass** das Polysilan eine Viskosität bei 25°C in einer 50 gew% Lösung in Toluol von 5 bis 50mPas aufweist, bevorzugt von 15 bis 30 mPas aufweist.

7. Polysilan nach Anspruch 4 bis 6, **dadurch gekennzeichnet, dass** es während des Trockenspinnens mit Verstreckungsfaktoren von 5 bis 10, vorzugsweise von 6 bis 8 versponnen werden kann.

8. Ein Polysilan nach Anspruch 4 bis 7, **dadurch gekennzeichnet, dass** die Faserfilamentbestandsabnahme pro Stunde, wie in der Beschreibung bestimmt, einen Wert von 0 bis 75 %, vorzugsweise von 0 bis 60 %, besonders bevorzugt von 0 bis 40 %, noch mehr bevorzugt von 0 bis 30 % und noch mehr bevorzugt von 0 bis 20% aufweist.

9. Polysilan nach Anspruch 4 bis 8, **dadurch gekennzeichnet, dass** das Polysilan bei einer Konzentration von 70 bis 90 Gewichtsprozent in Toluol und/oder Dioxan löslich ist und/oder eine keramische Ausbeute bei der Pyrolyse bis 800°C von mindestens 60 % aufweist.

10. Verfahren zur Herstellung von Siliciumcarbid-Fasern, **dadurch gekennzeichnet, dass** die Polysilane nach Anspruch 4 bis 9 zu Polysilan-Fasern versponnen werden und die Polysilan-Fasern durch Pyrolyse und vorzugsweise einer Sinterung in Siliciumcarbid-Fasern umgewandelt werden.

11. Siliciumcarbid-Fasern, die nach dem Verfahren nach Anspruch 10 hergestellt worden sind.

12. Siliciumcarbid-Faser, **dadurch gekennzeichnet, dass** die Querschnittsfläche der Faser eine wellige Begrenzungslinie aufweist, wobei mindestens zwei Krümmungsradien mit unterschiedlichen Vorzeichen einen Betrag von jeweils mindestens 1 µm aufweisen.

13. Faserverbundwerkstoff, **dadurch gekennzeichnet, dass** er eine Polysilan-Faser, hergestellt aus einem Polysilan nach Anspruch 4 bis 9 sowie ein Matrixmaterial umfasst und/oder vorzugsweise durch Pyrolyse in einen keramischen Faserverbundwerkstoff umgewandelt wird.

14. Verwendung eines Polysilans, eines Faserverbundwerkstoffs oder von Siliciumcarbid-Fasern nach den Ansprüchen 4 bis 9, beziehungsweise 13, beziehungsweise 11 und 12 zur Herstellung eines Siliciumcarbid-haltigen Formkörpers oder Faserverbundstoffes für den Leichtbau, die Elektroindustrie, die Raumfahrt, den Kraftfahrzeugbau und den Flugzeugbau.

## Claims

1. A method for producing a polysilane comprising the following steps:
(i) a disproportionation reaction of a methylchlorodisilane-mixture to a chlorine-including oligosilane,
(ii) a substitution reaction of the chlorine atoms contained in the oligosilane by means of a conversion with a primary amine,
(iii) a crosslinking reaction of the oligosilane using a chain forming agent to polysilanes, **characterized in that** the chain forming agent comprises at least two nucleophile groups.

2. The method according to claim 1, **characterized in that** as chain forming agent diamine, triamine, diol and/or triol, particularly preferably 1,6-diaminohexane, 1,2-ethylenediamine, melamine, triethylenediamine, glycerol and/or triethanolamine are used.

3. The method according to claim 1 or 2, **characterized in that** the chain forming agent is used preferably in a concentration of 1 to 40 mass-%, particularly preferably 1 to 20 mass-% and most preferably 1 to 10 mass-% in comparison to oligosilane.

4. A polysilane, which has been produced with a method according to claim 1 to 3.

5. The polysilane according to claim 4, **characterized in that** the polysilane has a molecular weight Mw of 1000 to 10000 g/mol, preferably of 2000 to 4000 g/mol, most preferably of 2500 to 3500 g/mol, and a bimodale molecular weight distribution and/or a polydispersity of 1 to 5, preferably of 1,5 to 4 and most preferably of 2.5 to 3.5.

6. The polysilane according to claim 4 or 5, **characterized in that** the polysilane has a viscolsity at 25°C in a 50 wt.-% solution of toluene of 5 to 50 mPas and preferably of 15 to 30 mPas.

7. The polysilane according to claim 4 to 6, **characterized in that** it may be spun during the dry spinning with stretching factors of 5 to 10, preferably of 6 to 8.

8. The polysilane according to claim 4 to 7, **characterized in that** the fiber filament stock decrease per hour, as determined in the specification, has a value of 0 to 75 %, preferably of 0 to 60 %, particularly preferably of 0 to 40 %, even more preferably of 0 to 30 % and even more preferred of 0 to 20 %.

9. The polysilane according to claim 4 to 8, **characterized in that** the polysilane is soluble at a concentration of 70 to 90 percent by weight in toluene and/or dioxane and/or has a ceramic yield at the pyrolysis up to 800°C of at least 60 %.

10. A method for preparing siliciumcarbide fibers, **characterized in that** the polysilane according to claim 4 to 9 is spun to polysilane fibers and the polysilane fibers are converted via pyrolyse and preferably via sintering into siliciumcarbide fibers.

11. A siliciumcarbide fiber, which has been produced in accordance with a method according to claim 10.

12. A siliciumcarbide fiber, **characterized in that** the area of the cross section of the fiber has a wavy boundary line, wherein at least two radii of curvature with different number signs have an absolute value of at least 1 µm.

13. A fiber composite **characterized in that** it contains a polysilane fiber produced from a polysilane according to claim 4 to 9 as well as a matrix material and/or is converted preferably via pyrolysis into a ceramic fiber composite.

14. Use of a polysilane, of a fiber composite or of siliciumcarbide fibers according to claims 4 to 9 or claim 13, respectively, or claims 11 and 12, respectively, for preparing a siliciumcarbide-containing form body or fiber composite for the lightweight construction, the electroindustry, die aerospace, the automotive engineering and the aircraft industry.

## Revendications

1. Procédé de production d'un polysilane, le procédé comprenant les étapes suivantes :
(i) une réaction de dismutation d'un mélange de méthylchlorodisilane en un oligosilane chloré,
(ii) une réaction de substitution des atomes de chlore contenus dans l'oligosilane par réaction avec une amine primaire,
(iii) une réaction de réticulation des oligosilanes à l'aide d'un agent d'enchaînement pour former des polysilanes, **caractérisé en ce que** l'agent d'enchaînement comporte au moins deux groupes nucléophiles.

2. Procédé selon la revendication 1, **caractérisé en ce que** l'on utilisée comme agent d'enchaînement des diamines, des triamines, des diols et/ou des triols, de manière particulièrement préférée le 1,6-diaminohexane, la 1,2-éthylènediamine, la mélamine, la triéthylènediamine, le glycérol et/ou la triéthanolamine.

3. Procédé selon la revendication 1 ou 2, **caractérisé en ce que** l'agent d'enchaînement est utilisé de préférence à une concentration de 1 à 40 % en masse, de manière particulièrement préférée de 1 à 20 % en masse et le plus préférablement de 1 à 10 % en masse par rapport à l'oligosilane.

4. Polysilane qui a été préparé par un procédé selon les revendications 1 à 3.

5. Polysilane selon la revendication 4, **caractérisé en ce que** le polysilane a un poids moléculaire Mw de 1000 à 10000 g/mol, de préférence de 2000 à 4000 g/mol, le plus préférablement de 2500 à 3500 g/mol et une distribution bimodale de poids moléculaire et/ou une polydispersité de 1 à 5, de préférence de 1,5 à 4, le plus préférablement de 2,5 à 3,5.

6. Polysilane selon la revendication 4 ou 5, **caractérisé en ce que** le polysilane a une viscosité à 25 °C, dans une solution à 50 % en poids dans le toluène, de 5 à 50 mPa.s, de préférence de 15 à 30 mPa.s.

7. Polysilane selon les revendications 4 à 6, **caractérisé en ce qu'**il peut être filé pendant le filage à sec avec des facteurs d'étirage de 5 à 10, de préférence de 6 à 8.

8. Polysilane selon les revendications 4 à 7, **caractérisé en ce que** la consommation de filament de fibres par heure, telle que déterminée dans la description, a une valeur de 0 à 75 %, de préférence de 0 à 60 %, de manière particulièrement préférée de 0 à 40 %, de manière encore plus préférée de 0 à 30 % et de manière encore plus préférée de 0 à 20 %.

9. Polysilane selon les revendications 4 à 8, **caractérisé en ce que** le polysilane est soluble à une concentration de 70 à 90 % en poids dans le toluène et/ou le dioxanne et/ou a un rendement en céramique, à la pyrolyse jusqu'à 800 °C, d'au moins 60 %.

10. Procédé de production de fibres de carbure de silicium, **caractérisé en ce que** les polysilanes selon les revendications 4 à 9 sont filés en fibres de polysilane et **en ce que** les fibres de polysilane sont converties par pyrolyse et de préférence par frittage en fibres de carbure de silicium.

11. Fibres de carbure de silicium produites par le procédé selon la revendication 10.

12. Fibre de carbure de silicium, **caractérisée en ce que** la surface de la section transversale de la fibre présente une ligne de limitation ondulée, au moins deux rayons de courbure de signes différents ayant une valeur d'au moins 1 µm chacun.

13. Matériau composite renforcé par des fibres, **caractérisé en ce qu'**il comprend une fibre de polysilane, produite à partir d'un polysilane selon les revendications 4 à 9 et d'un matériau matriciel et/ou est de préférence transformée par pyrolyse en un matériau composite céramiques renforcé par des fibres.

14. Utilisation d'un polysilane, d'un matériau composite renforcé par des fibres ou de fibres de carbure de silicium selon les revendications 4 à 9, ou 13, ou 11 et 12 pour la fabrication d'un corps moulé contenant un carbure de silicium ou d'un matériau composite renforcé par des fibres destiné à la construction légère, l'industrie électrique, l'aérospatiale, la construction automobile et la construction aéronautique.
